# EUROPEAN PATENT APPLICATION

(11) **EP 4 042 969 A1**
(43) Date of publication of application: **17.08.2022**
(21) Application number: 20873450.9
(22) Date of filing: 07.10.2020
(51) Int. Cl.: A61C 8/00

(54) **IMPLANT DEVICE IN NATURAL TOOTH SHAPE HAVING DETACHABLE DENTAL ROOT**

(30) Priority: 11.10.2019 KR 20190126042
(71) Applicant: Seoul National University R & DB Foundation, Seoul 08826 (KR); Dentium Co., Ltd., Seoul 06169 (KR)
(72) Inventor: KIM, Hyoun-Ee, Seoul 06663 (KR); KIM, Byoung Kook, Suwon-si, Gyeonggi-do 16229 (KR); KIM, Pan Gyu, Suwon-si, Gyeonggi-do 16229 (KR); LEE, Sung-Mi, Yongin-si, Gyeonggi-do 16846 (KR)
(74) Representative: von Bülow & Tamada
(86) International application number: PCT/KR2020/013646
(87) International publication number: WO 2021/071237

(57) **Abstract**

The present invention relates to an implant device in a shape of a natural tooth with a removable tooth root including an implant body having a tooth root hole formed to penetrate therethrough, an integral tooth root formed by being integrally coupled to the implant body, a removable tooth root formed to extend from the implant body while being inserted along the root hole, and a tooth root fixing unit formed to fix the removable tooth root to the implant body.

## Description

### [Technical Field]

The present invention relates to an implant device in a shape of a natural tooth having a removable tooth root

### [Background Art]

In general, teeth are a physical primary decomposition component that crushes food inserted into an oral cavity according to movement of a jawbone.

These teeth are always exposed to risks such as being rotten by contamination or being damaged by external impact.

Since human teeth do not generate additional teeth after permanent teeth are created, when the damage to the permanent teeth occurs, dental treatment to supplement the damaged permanent teeth is required.

When damage to a specific part of teeth occurs, only a simple treatment for the corresponding part may be performed. However, there are many cases in which, when the damage to the corresponding teeth is excessive or the function of the teeth deteriorates, the corresponding teeth need to be extracted.

In the past, when the tooth extraction treatment was required, the tooth was replaced with an imitation tooth such as a denture. However, in recent years, due to the development of artificial teeth such as implant devices, it has become possible to perform substantially similar shapes and functions to existing natural teeth.

The implant device is an artificial tooth that replaces a missing natural tooth, and is generally formed of an implant, an abutment, and a prosthesis.

The implant refers to a fixture implanted in an alveolar bone to support the prosthesis for the restoration of the missing natural tooth to the alveolar bone. The abutment refers to a column coupled to the implant for connection between the implant and the prosthesis. The prosthesis means that it is manufactured in the form of a tooth.

This implant device has a structure that sequentially couples the abutment and the prosthesis in a fixed state by implanting a cylindrical-shaped single implant in the alveolar bone. Therefore, the existing implant device has a structure in which the implant with a single-column structure is drilled and installed regardless of the shape of the tooth root of the extracted natural tooth.

The treatment method may be advantageous in terms of the popularity of the treatment, but is a treatment method of artificially creating a new tooth root rather than the existing tooth root. Therefore, the treatment method has various problems such as surgical pain, side effects, and slow recovery time.

Accordingly, recently, an apparatus and method for manufacturing and inserting an implant identical to a tooth root of a natural tooth have been used.

When the extracted natural tooth has a single tooth root, there is no major problem in the creation and insertion of the same artificial tooth. However, when the natural tooth has a plurality of tooth roots having different shapes and implantation directions, it is still difficult to insert an artificial tooth (implant device) to correspond to the corresponding tooth root.

### [Disclosure]

### [Technical Problem]

An object of the present invention is to provide an implant device in a shape of a natural tooth with a removable tooth root capable of more easily implanting and fixing artificial teeth having a plurality of tooth roots.

### [Technical Solution]

According to an aspect of the present invention, an implant device in a shape of a natural tooth with a removable tooth root includes: an implant body having a tooth root hole formed to penetrate therethrough; an integral tooth root formed by being integrally coupled to the implant body; a removable tooth root formed to extend from the implant body while being inserted along the root hole; and a tooth root fixing unit formed to fix the removable tooth root to the implant body.

The integral tooth root and the removable tooth root may each be formed in the shape of the natural tooth corresponding to an implantation area.

The integral tooth root and the removable tooth root may each be coupled to the implant body to have an intersection with each other.

The tooth root hole may include a spiral structure formed along an inner circumferential surface, and the tooth root fixing unit may include a screw which is rotatably inserted along the spiral structure.

The tooth root fixing unit may further include an adhesive injected toward an inner space of the tooth root hole into which the removable tooth root is inserted.

The removable tooth root may further include a tooth root guide formed to move while being fixed along the tooth root hole.

The tooth root guide may include a concave guide recessed along the inner circumferential surface of the tooth root hole, and the removable tooth root may include a protrusion that protrudes from an outer surface and is inserted into the concave guide.

The tooth root guide may include a protruding guide protruding along an inner circumferential surface of the tooth root hole, and the removable tooth root may include an insertion part that is recessed on an outer surface and has the protruding guide inserted thereinto.

The removable tooth root may be formed to have a narrow diameter toward an implantation area.

The tooth root hole may include an upper area formed to have a first diameter and having an upper portion exposed to the outside, and a lower area formed to have a second diameter smaller than the first diameter and facing the implantation area.

The removable tooth root may include an implanted tooth root implanted in the implantation area through the lower area, and a fixed tooth root fixed between the upper area and the lower area.

The fixed tooth root may be formed to have a third diameter whose largest diameter is smaller than the first diameter and larger than the second diameter.

The implant device may further include a stopper protruding from an inner circumferential surface of the tooth root hole to limit an insertion movement of the removable tooth root.

The implant body may further include a prosthetic coupling part coupling the implant body with a prosthesis.

### [Advantageous Effects]

According to the implant device in a shape of a natural tooth with a removable tooth root of the present invention having the above-described configuration, it is possible to further improve an implantation effect to correspond to a multi-tooth root of the natural tooth through a sequential combination of an integral tooth root and a removable tooth root.

In addition, it is possible to further improve device stability by providing a means for fixing a removable tooth root inside an implant body.

In addition, it is possible to further improve treatment accuracy by providing a means for fixing an implantation posture when the removable tooth root is inserted.

### [Description of Drawings]

FIG. 1 is a conceptual diagram for describing a method of applying an implant device 100 according to the present invention.
FIG. 2 is an exploded perspective view for describing an assembly structure of the implant device 100 according to an embodiment of the present invention.
FIG. 3 is a diagram for describing a coupling structure of the implant device 100 of FIG. 2.
FIG. 4 is a diagram for describing a detailed structure of an implant body 110 and a removable tooth root 140 of FIG. 2.
FIG. 5 is a diagram for describing a tooth root fixing unit 150 of FIG. 2.
FIG. 6 is a view for describing the implant body 110 provided with the tooth root guide 150 and the removable tooth root 140 according to another embodiment of the present invention.
FIG. 7 is a diagram for describing the implant device 100 having a stopper 170 according to another embodiment of the present invention.
FIGS. 8 to 11 are diagrams for sequentially describing a method of implanting an implant device 100 of FIG. 2.

### [Mode for Invention]

Hereinafter, an implant device in a shape of a natural tooth with a removable tooth root according to a preferred embodiment of the present invention will be described in detail with reference to the drawings. Throughout the present disclosure, components that are the same as or similar to each other will be denoted by reference numerals that are the same as or similar to each other and a description therefor will be replaced by the first description, in different embodiments.

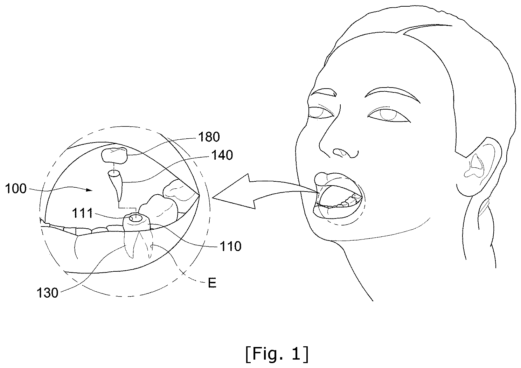

FIG. 1 is a conceptual diagram for describing a method of applying an implant device 100 according to the present invention.

Natural teeth of human lose their function due to various reasons such as contamination by food, damage caused by external shocks, and deterioration due to aging.

As such, natural teeth that have lost their function may be replaced with artificial teeth such as implant devices.

Most of the existing implant devices have a structure that is implanted in an alveolar bone through a single implant, or a method of manufacturing a tooth root similar to that of a natural tooth and implanting the tooth root has been applied.

In particular, in the case of an implant device in a shape of a natural tooth, when the natural tooth is formed of a single tooth root, a tooth root in the same shape may be manufactured and implanted, so there is no major problem.

However, when there are two or more root roots of a natural tooth, it is difficult to implant an implant device having a plurality of tooth roots because the corresponding tooth roots have different implantation directions and positions.

The present invention is to solve the above-described problem, the implant device 100 may first perform a primary implantation through an implant body 110 integrally coupled with the integral tooth root 130, and then, perform a secondary implantation by inserting a removable tooth root 140 corresponding to another tooth root into a tooth root hole 112. Finally, by coupling the prosthesis 180 on the implant body 110, the implantation of the implant device 100 having a plurality of tooth roots may be completed.

As described above, according to the implant device 100 of the present invention, the integral tooth root 130 and the removable tooth root 140 may be sequentially implanted in an implantation area E from which natural teeth are extracted. Therefore, even in the implantation area E from which natural teeth of a multi-tooth root are extracted, the implantation treatment having the corresponding multi-tooth root may be performed, thereby further improving the easiness of treatment.

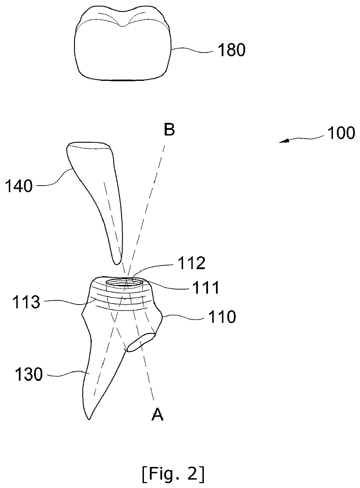

The method of applying an implant device is briefly described above. A structure and coupling method of an implant device will be described in detail with reference to FIGS. 2 to 4.

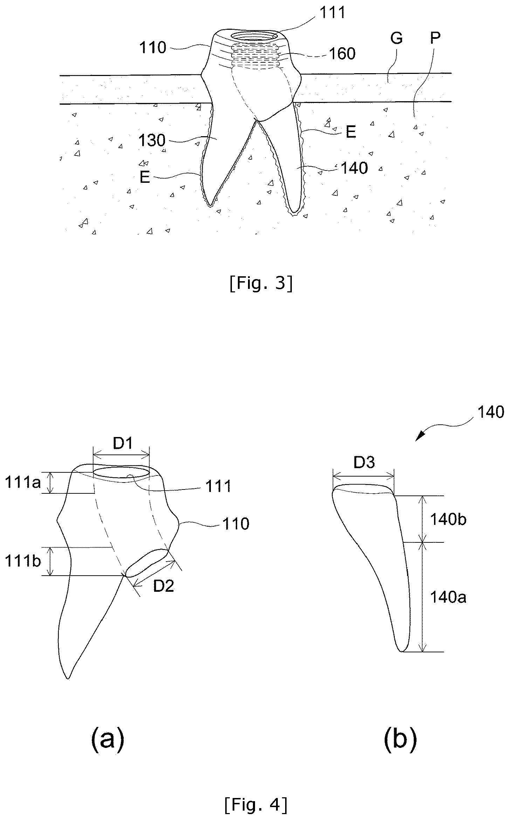

FIG. 2 is an exploded perspective view for describing an assembly structure of the implant device 100 according to an embodiment of the present invention, FIG. 3 is a view for describing the coupling structure of the implant device 100 of FIG. 2, and FIG. 4 is a view for describing the detailed structure of the implant body 110 and the removable tooth root 140 of FIG. 2.

As illustrated, the implant device 100 in a shape of a natural tooth with a removable tooth root 140 may include an implant body 110, an integral tooth root 130, a removable tooth root 140, a tooth root fixing unit 160, and a prosthesis 180.

The implant body 110 is a means for coupling the integral tooth root 130 and the removable tooth root 140 with the prosthesis 180, respectively. To this end, the implant body 110 may include a tooth root hole 111 and a prosthetic coupling part 113.

The tooth root hole 111 is a means for extending the removable tooth root 140 into the implantation area E while being inserted into the implant body 110, and may be formed to penetrate through one side and the other side of the implant body 110. As illustrated in FIGS. 2 and 3, the tooth root hole 111 may be formed to penetrate through an upper surface coupled with the prosthesis 180 and a lower surface facing the implantation area E, respectively.

The tooth root hole 111 may include a spiral structure 112 formed along an inner circumferential surface. The spiral structure 112 is a means for rotational coupling of a tooth root fixing unit 160 to be described later.

As illustrated in FIG. 2, the tooth root hole 111 may be formed to have a central axis B that intersects with a central axis A of the integral tooth root 130. In other words, the tooth root hole 111 may be formed to be inclined in one direction.

In addition, the tooth root hole 111 may include an upper area 111a that is formed to have a first diameter D1 and has an upper portion exposed to the outside, and a lower area 111b that is formed to have a second diameter D2 smaller than the first diameter D1 and faces the implantation area E. That is, the tooth root hole 111 may have an inner space whose diameter is narrowed from an upper opening toward the implantation area E.

The prosthetic coupling part 113 is a means for coupling the prosthesis 180 with the implant body 110 and may include a spiral structure formed along an outer surface of the implant body 110 as illustrated in FIG. 2. Accordingly, the prosthesis 180 may include a coupling structure corresponding to the spiral structure, and may be coupled such that the prosthesis 180 is covered on the outer surface of the implant body 110 through the coupling of the corresponding structures.

In addition, although not specifically illustrated in this embodiment, the prosthetic coupling part 113 may be formed of an adhesive and applied to the outer surface of the implant body 110. In addition, the prosthetic coupling part 113 may have a protruding structure that may be fitted into the inner space of the prosthesis 180, and may further have various other coupling structures.

The integral tooth root 130 is a means that is integrally coupled to the implant body 110 and inserted into any one of the implantation area E. In other words, the integral tooth root 130 may be formed to correspond to any one of the multi-tooth root (a pair of tooth roots in the present invention) of the extracted natural teeth, and may be integrally coupled to the implant body 110. The implant body 110 and the integral tooth root 130 may be manufactured in various ways, but may be created in the same structure by scanning a structure corresponding to the implant body 110 and one tooth root of an extracted natural tooth using 3D printing technology, for example.

Therefore, as illustrated in FIG. 3, the integral tooth root 130 is inserted into any one of the pair of implantation areas E, and thus, the integral implant body 110 may also be primarily seated on an oral gum G of a patient.

Since the integral tooth root 130 is formed to correspond to the tooth root of the extracted natural tooth, the shape of the integral tooth root is not limited, but in this embodiment, the integral tooth root 130 may be formed to be inclined toward one direction, and formed to have a narrow diameter toward an end toward an alveolar bone P.

The removable tooth root 140 is a means for being inserted into the remaining implantation area E in addition to the implantation area E in which the integral tooth root 130 is inserted among the implantation areas E of the extracted natural teeth. To this end, the removable tooth root 140 may be formed to extend from the implant body 110 while being inserted along the tooth root hole 111. That is, the removable tooth root 140 has a shape corresponding to the multi-tooth root of natural teeth, and a part thereof may be inserted through the tooth root hole 111 and the rest may be inserted into the implantation area E. Therefore, as illustrated in FIG. 2, the initial removable tooth root 140 may have a state separated from the implant body 110, and the integral tooth root 130 may be inserted along the tooth root hole 111 while being inserted into the implantation area E as illustrated in FIG. 3, and inserted into the rest implantation area E.

Such a removable tooth root 140 may include an implanted tooth root 140a and a fixed tooth root 140b as illustrated in FIG. 4.

The implanted tooth root 140a is a tooth root portion extending outside the implant body 110 when inserted into the tooth root hole 111, and is a portion that is implanted in the implantation area E through the lower area 111b of the tooth root hole 111. That is, the implanted tooth root 140a may be a tooth root portion that is in contact with the gum G or alveolar bone P when the tooth root hole 111 is coupled.

The fixed tooth root 140b may be a tooth root portion located inside the tooth root hole 111 (between the upper area 111a and the lower area 111b) when the tooth root hole 111 is coupled. To this end, the fixed tooth root 140b may have a third diameter D3 whose largest diameter is smaller than the first diameter D1 of the upper area 111a of the tooth root hole 111, and larger than the second diameter D2 of the lower area 111b. Therefore, the fixed tooth root 140b having a larger diameter than the lower area 111b may be fixed inside the tooth root hole 111.

As such, the removable tooth root 140 may be formed to have a narrow diameter toward the implantation area E, and thus inserted into the tooth root hole 111. Both the integral tooth root 130 and the removable tooth root 140 may be formed to correspond to the tooth root of the extracted natural tooth. In this embodiment, it will be described as an example that the extracted natural teeth have a pair of tooth roots, and accordingly, the implantation area E is also configured as a pair.

The tooth root fixing unit 160 is a means for fixing the removable tooth root 140 inserted into the tooth root hole 111 to the implant body 110. To this end, the tooth root fixing unit 160 may be formed of a screw, an adhesive, and the like.

As illustrated in FIG. 3, the screw is formed to correspond to the spiral structure 112 of the tooth root hole 111 and is rotationally coupled to the tooth root hole 111, thereby pressing and fixing the upper portion of the removable tooth root 140 located in the inner space. It can be fixed by pressing the upper part. In this case, the upper surface of the fixed tooth root 140b of the removable tooth root 140 may be formed with a protruding or concave tooth root fitting part, and the screw may have screw fitting parts each of which is formed on a surface of the corresponding tooth root fitting part. Therefore, when the screw is in contact with the removable tooth root 140, the tooth root fitting part and the screw fitting part may be coupled to each other to improve the fixing force.

In addition, when the screw presses and fixes the removable tooth root 140, the space of the remaining tooth root hole 111 except for these may be filled with a sealing agent.

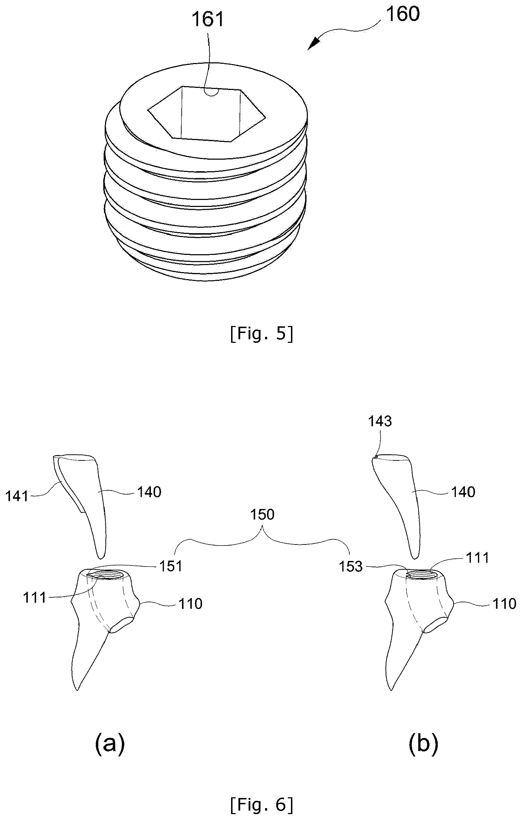

When the tooth root fixing unit 160 is formed of a screw, as illustrated in FIG. 5, the tooth root fixing unit 160 may include a prosthesis coupler 161 which is a coupling hole whose upper surface is opened.

The prosthesis coupler 161 is a means for coupling with the prosthesis 180 and may be a groove portion into which a coupling member provided in the prosthesis 180 may be inserted and fixed. The prosthesis coupler 161 is illustrated to have a hexagonal cross section in the present embodiment, but is not limited thereto, and may be implemented in various shapes.

Accordingly, the prosthesis 180 may be coupled to at least one of the prosthetic coupling part 113 provided in the implant body 110 and the prosthesis coupling part 161 provided in the tooth root fixing unit 160.

In addition, although not specifically illustrated, when the adhesive is applied to the tooth root fixing unit 160, the inner space of the tooth root hole 111 may be filled with an adhesive while the removable tooth root 140 is inserted into the tooth root hole 111. In this case, the removable tooth root 140 and the implant body 110 may be coupled through the adhesiveness of the corresponding adhesive.

The structure and manner of the tooth root fixing unit 160 is not limited, and the screw and the adhesive may be applied at the same time, or other coupling fixing methods may be applied.

According to this implant device 100, in order to extract a natural tooth having a multi-tooth root, the implant body 110 coupled with the integral tooth root 130 is first inserted into the first implantation area E, and then, the removable tooth root 140 may be coupled with the tooth root hole 111 to implement an artificial tooth corresponding to the extracted natural tooth. Accordingly, it is possible to further improve the treatment efficiency of an implant having an artificial tooth root having a shape corresponding to the tooth root of the natural tooth.

The configuration of the implant device 100 of the present invention is described above. In FIG. 6, the implant device 100 having the tooth root guide 150 will be described.

FIG. 6 is a diagram for describing the implant body 110 provided with the tooth root guide 150 and the removable tooth root 140 according to another embodiment of the present invention.

The implant device of this embodiment is substantially the same as the implant device described above, but there is some difference in that it includes the tooth root guide 150.

The tooth root guide 150 is a means for moving the removable tooth root 140 in a fixed state along the tooth root hole 111. In other words, the removable tooth root 140 may be a means for limiting movement in the tooth root hole 111.

To this end, the tooth root guide 150 may include a concave guide 151 or a protruding guide 153.

The concave guide 151 may be recessed along the inner circumferential surface of the tooth root hole 111 as in FIG. 6A. In other words, the concave guide 151 may be a groove portion formed along the inner surface to connect the upper and lower openings of the tooth root hole 111.

The outer surface of the removable tooth root 140 so as to be inserted into the concave guide 151 may include a protrusion 141 that is formed to protrude.

The protrusion 141 may have a structure protruding from the outer surface of the removable tooth root 140 in the height direction. The corresponding protrusion 141 may have a width so that it may be inserted into the concave guide 151.

Therefore, when the protrusion 141 is inserted into the concave guide 151, the removable tooth root 140 may be inserted along the tooth root hole 111 in a state in which the movement thereof is fixed by the concave guide 151.

Here, the concave guide 151 and the protrusion 141 may each be formed in a shape corresponding to each other, and the lengths or sizes thereof may be variously applied according to the process and the experimental situation.

The protruding guide 153 may have a configuration opposite to that of the concave guide 151.

The protruding guide 153 may be formed to protrude along the inner surface of the tooth root hole 111 as in FIG. 6B. In other words, the protruding guide 153 may have a bar shape protruding along the inner surface to connect the upper and lower openings of the tooth root hole 111.

The removable tooth root 140 may include an insertion part 143 recessed on the outer surface to be coupled to the corresponding protruding guide 153.

The insertion part 143 may be a groove portion recessed on the outer surface of the removable tooth root 140 in the height direction. The insertion part 143 may have a width in which the protruding guide 153 may be inserted.

Therefore, when the concave guide 151 is inserted into the insertion part 143, the removable tooth root 140 may be inserted along the tooth root hole 111 in a state in which the movement thereof is fixed by the concave guide 151.

The implant device having the tooth root guide 150 is described above. In FIG. 6, the implant device having a stopper will be described.

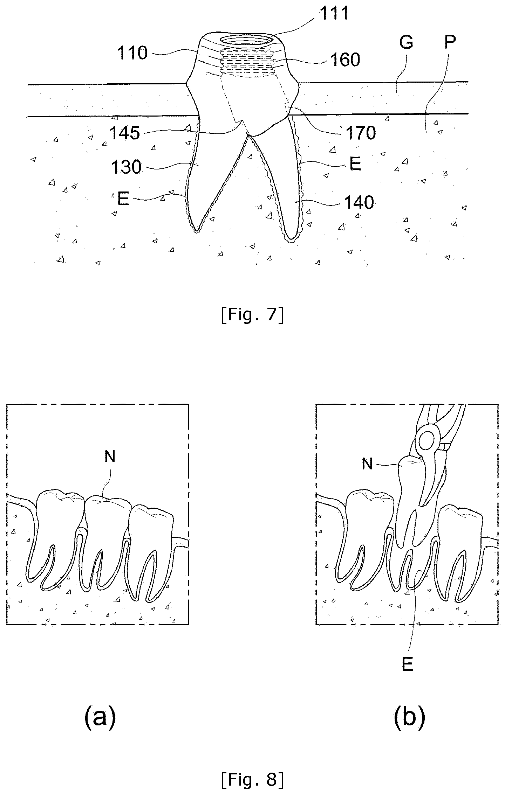

FIG. 7 is a diagram for describing the implant device having a stopper 170 according to another embodiment of the present invention.

As illustrated, the implant device of this embodiment is substantially similar to the implant device of FIG. 3, but has a difference in that it includes the stopper 170.

The stopper 170 is a means for limiting the insertion movement of the removable tooth root 140 (FIG. 4, fixed tooth root 140b), omitted below) located inside the tooth root hole 111. To this end, the stopper 170 may be formed to protrude toward the central axis from the inner peripheral surface of the lower area (FIG. 4, 111b, omitted below) of the tooth root hole 111. That is, the stopper 170 is formed in a structure protruding from the lower area of the tooth root hole 111, so that the diameter of the corresponding area may be narrower. In particular, although not illustrated in the present embodiment, the stopper 170 may further have an additional curved structure. For example, the stopper 170 may have a "L" shape by bending the end protruding toward the central axis of the tooth root hole 111 so that the removable tooth root 140 faces the upper surface.

Correspondingly, the removable tooth root 140 may have a locking jaw 145 that is caught by the corresponding stopper 170.

The locking jaw 145 may have a structure extending to both sides of the removable tooth root 140 so as to be caught by the stopper 170. Specifically, the locking jaw 145 is formed in the fixed tooth root portion of the removable tooth root 140, and thus, the implanted tooth root (FIG. 4, 140a, omitted below) is implanted in the implantation area E in the same way as before, and the fixed tooth root is limited in movement by the locking jaw 145 and the stopper 170, so the insertion movement into the alveolar bone may be stopped.

According to the implant device having the same structure as described above, the lengths of the implanted tooth root and the fixed tooth root may be set from the time of design, and the stopper 170 corresponding to the set length may be installed in the tooth root hole 111. Therefore, since only the implanted tooth root may be implanted in the implantation area E according to the designed length, it is possible to prevent in advance the case in which the removable tooth root 140 is implanted in excess of the implantation area E and is installed not to reach the implantation area E.

The implant device provided with the stopper is described above. Hereinafter, the implantation process of the above-described implant device will be described in stages.

FIGS. 8 to 11 are diagrams for sequentially describing a method of implanting an implant device 100 of FIG. 2.

As illustrated in FIG. 8A, a patient may have natural teeth (N) damaged by various factors. The natural tooth N whose function has lost due to the severe degree of damage may be extracted through an extraction tool in order to be replaced with the implant device 100.

When the damaged natural tooth N is extracted as illustrated in FIG. 8B, the implantation area E in which the corresponding natural tooth (N) is implanted is generated. The implantation area E may include the alveolar bone P and the gum G, and in this embodiment, for simplicity of description, the implantation area E is referred to as the tooth root area of the extracted natural tooth N.

The natural tooth N may have a single tooth root, but may include a multi-tooth root such as a pair of tooth roots. Accordingly, when the corresponding natural tooth N has a pair of tooth roots, a pair of implantation areas E (first implantation area and second implantation area) may be generated as illustrated in FIG. 8B.

When the extraction is completed in this way, the corresponding implantation area E and the extracted natural tooth N are scanned, and thus, the implant device 100 such as the corresponding implant body 110, the integral tooth root 130, the removable tooth root 140, and prosthesis 180 may be manufactured. Various methods may be applied to the method of manufacturing an implant device 100, but in this embodiment, a case in which the implant device 100 is manufactured through 3D printing will be described as an example.

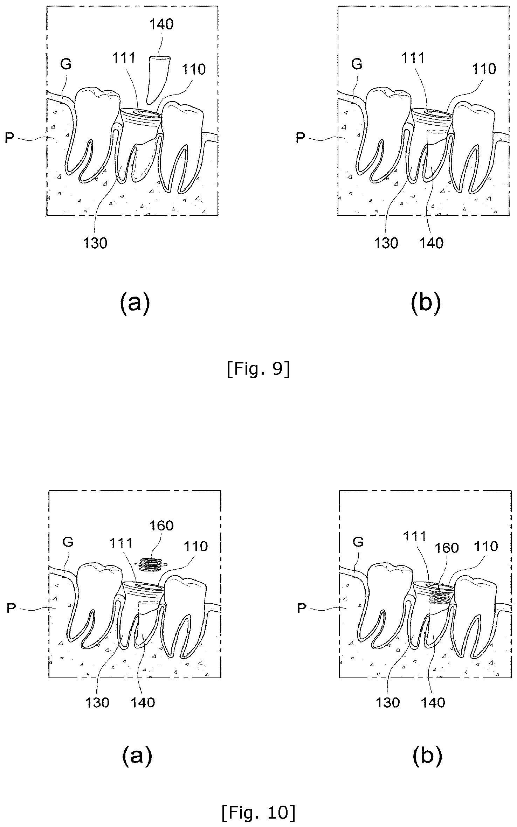

When the manufacture of the implant device 100 is completed, first, as illustrated in FIG. 9A, the implant body 110 and the integral tooth root 130 integrally formed with the implant body 110 may be implanted in the corresponding area among a pair of implantation areas E.

Since the integral tooth root 130 is manufactured in the shape of the natural tooth corresponding to the tooth root of the existing natural tooth N, the integral tooth root 130 may have an inclined structure or a structure in which the diameter is narrowed downward.

Therefore, the integral tooth root 130 may be inserted obliquely with respect to the first implantation area to be implanted in the alveolar bone P, and the implant body 110 integrated therewith may be seated to be exposed on the gum G.

Thereafter, the removable tooth root 140 formed to correspond to the second implantation area may be inserted through the tooth root hole 111 formed in the implant body 110.

By implantation of the integral tooth root 130, the implant body 110 may be positioned on the gum G, and the tooth root hole 111 may be formed to correspond to the second implantation area while the implant body 110 is seated. In addition, the tooth root hole 111 is in a state in which the diameter becomes narrower toward the lower area (FIG. 4, 111b, omitted below).

Therefore, when the removable tooth root 140 is inserted along the tooth root hole 111, the implanted tooth root (FIG. 4, 140a, omitted below) having a smaller diameter than the lower area of the tooth root hole 111 may be inserted into the second implantation area by penetrating through the tooth root hole 111. At the same time, the fixed tooth root (FIG. 4, 140b, omitted below) having a larger diameter than the lower area of the tooth root hole 111 is physically fitted by the narrow tooth root hole 111, and the movement thereof may be limited.

Therefore, when the removable tooth root 140 is inserted into the tooth root hole 111, as shown in FIG. 9B, a part (implanted tooth root) of the removable tooth root 140 is implanted in the second implantation area, and the remaining tooth root (fixed tooth root) may have a state of being fitted in the inner region of the tooth root hole 111.

When the removable tooth root 140 is inserted into the tooth root hole 111, as illustrated in FIG. 10A, the tooth root fixing unit 160 may be inserted into the tooth root hole 111.

Since a spiral structure is formed inside the tooth root hole 111, the tooth root fixing unit 160 such as a screw may be inserted into the tooth root hole 111 to rotate.

The tooth root fixing unit 160 which is rotated and inserted in this way may press the upper portion of the removable tooth root 140 to fix the movement as illustrated in FIG. 10B, and at the same time, completely move the implanted tooth root to the second implantation area E.

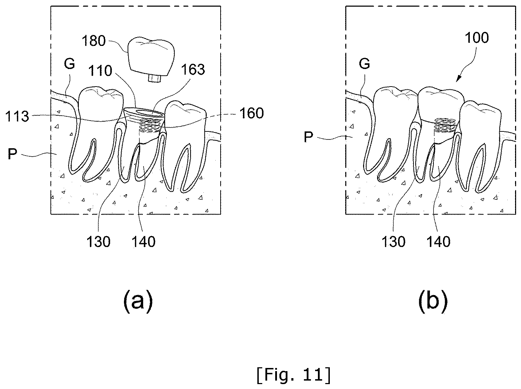

When the fixed coupling of the tooth root fixing unit 160 is completed, as illustrated in FIG. 11A, an empty space of the tooth root hole 111 may be filled with a material such as an adhesive or a sealing agent. Accordingly, it is possible to further fix the movement of the tooth root fixing unit 160 and the removable tooth root 140 or to prevent the inflow of foreign substances.

On the other hand, when the prosthesis 180 is coupled to the prosthesis coupler 161 (FIG. 5, omitted below) of the tooth root fixing unit 160, the adhesive or the sealing agent may not be applied to the tooth root hole 111, or may be applied only to some areas.

When these measures are completed, the coupling of the implant body 110 or the tooth root fixing unit 160 with the prosthesis 180 may be performed.

The prosthetic coupling part 113 such as a spiral structure may be provided on the outer surface of the implant body 110, and thus, may be coupled to the prosthesis 180.

Alternatively, the coupling member of the prosthesis 180 may be inserted into the prosthesis coupler of the tooth root fixing unit 160, and thus, the prosthesis 180 may be fixed.

When the coupling of the prosthesis 180 is completed, as illustrated in FIG. 11B, the implant device 100 having the multi-tooth root having the same structure as the existing natural tooth N may be implanted and used.

The implant device 100 in the shape of the natural tooth having the removable tooth root 140 is described above. In the above description, the case in which the integral tooth root 130, the tooth root hole 111, and the removable tooth root 140 have all a single configuration is described. However, the present invention is not limited thereto, and the integral tooth root 130, the tooth root hole 111, and the removable tooth root 140 may be configured in plural in consideration of a patient's oral condition and an operator's situation. Furthermore, it may be considered that, in addition to the artificial tooth root in the shape of the natural tooth, the implant having the same structure as the existing artificial tooth root may be further added.

According to the implant device 100 as described above, in manufacturing and operating the implant device 100 corresponding to the multi-tooth root of the natural teeth, various effects such as further improving the easiness of the treatment through the removable tooth root 140 and minimizing the side effects of the treatment may be implemented. Accordingly, it is determined that it will be possible to create a comprehensive synergy effect that strengthens the related industrial market by expanding the utility of artificial teeth.

The implant device in a shape of a natural tooth with a removable tooth root as described above is not limited to the configuration and operation method of the embodiments described above. The above-described embodiments may be configured so that various modifications may be made by selective combinations of all or some of the respective embodiments.

## Claims

1. An implant device in a shape of a natural tooth with a removable tooth root, comprising:
an implant body having a tooth root hole formed to penetrate therethrough;
an integral tooth root formed by being integrally coupled to the implant body;
a removable tooth root formed to extend from the implant body while being inserted along the root hole; and
a tooth root fixing unit formed to fix the removable tooth root to the implant body.

2. The implant device of claim 1, wherein the integral tooth root and the removable tooth root are each formed in the shape of the natural tooth corresponding to an implantation area.

3. The implant device of claim 1, wherein the integral tooth root and the removable tooth root are each coupled to the implant body to have an intersection with each other.

4. The implant device of claim 1, wherein the tooth root hole includes a spiral structure formed along an inner circumferential surface, and
the tooth root fixing unit includes a screw which is rotatably inserted along the spiral structure.

5. The implant device of claim 1, wherein the tooth root fixing unit further includes an adhesive injected toward an inner space of the tooth root hole into which the removable tooth root is inserted.

6. The implant device of claim 1, wherein the removable tooth root further includes a tooth root guide formed to move while being fixed along the tooth root hole.

7. The implant device of claim 6, wherein the tooth root guide includes a concave guide recessed along the inner circumferential surface of the tooth root hole, and
the removable tooth root includes a protrusion that protrudes from an outer surface and is inserted into the concave guide.

8. The implant device of claim 6, wherein the tooth root guide includes a protruding guide protruding along an inner circumferential surface of the tooth root hole, and
the removable tooth root includes an insertion part that is recessed on an outer surface and has the protruding guide inserted thereinto.

9. The implant device of claim 1, wherein the removable tooth root is formed to have a narrow diameter toward an implantation area.

10. The implant device of claim 1, wherein the tooth root hole includes:
an upper area formed to have a first diameter and having an upper portion exposed to the outside; and
a lower area formed to have a second diameter smaller than the first diameter and facing the implantation area.

11. The implant device of claim 10, wherein the removable tooth root includes:
an implanted tooth root implanted in the implantation area through the lower area; and
a fixed tooth root fixed between the upper area and the lower area.

12. The implant device of claim 11, wherein the fixed tooth root is formed to have a third diameter whose largest diameter is smaller than the first diameter and larger than the second diameter.

13. The implant device of claim 1, further comprising:
a stopper protruding from an inner circumferential surface of the tooth root hole to limit an insertion movement of the removable tooth root.

14. The implant device of claim 1, wherein the implant body further includes prosthetic coupling part coupling the implant body with a prosthesis.
